Europäisches Patentamt

**European Patent Office**

**Office européen des brevets**

(11) Numéro de publication: **0 051 550**
**A1**

(12) # DEMANDE DE BREVET EUROPEEN

(21) Numéro de dépôt: **81430033.1**

(22) Date de dépôt: **22.10.81**

(51) Int. Cl.³: **B 65 G 33/16**
**B 65 G 33/26**

(30) Priorité: **31.10.80 FR 8023489**

(43) Date de publication de la demande:
**12.05.82 Bulletin 82/19**

(84) Etats contractants désignés:
**BE CH DE GB IT LI**

(71) Demandeur: **TRANSITUBE PROJET Société anonyme dite:**
**Jolibois la Blaque Chemin de la Blaque**
**F-13100 Aix-en-Provence(FR)**

(72) Inventeur: **Bouquet, René**
**Quartier Malbergue Le Petit Nice**
**F-13320 Bouc-Bel-Air(FR)**

(74) Mandataire: **Azais, Henri et al,**
**c/o CABINET BEAU DE LOMENIE 14, rue Raphael**
**F-13008 Marseille(FR)**

(54) **Dispositif pour transporter des produits solides à l'état divisé.**

(57) L'invention a pour objet des dispositifs pour transporter des produits solides à l'état divisé.

Un dispositif selon l'invention comporte une gaine tubulaire flexible 5, munie de deux ouvertures 6 et 7 et, à l'intérieur de celle-ci, une tige 8 portant des brins souples et flexibles 9 qui sont implantés radialement le long d'une ou plusieurs hélices de même pas. La tige 8 est entraînée en rotation par un moteur 10 dans le sens du pas des hélices.

Une application est le transport des produits solides fragiles par exemple de grains de café torréfiés, de granulés pharmaceutiques ou d'aliments de bétail.

Fig. 1

EP 0 051 550 A1

1

Dispositif pour transporter des produits solides à l'état divisé.

La présente invention a pour objet des dispositifs pour transporter des produits solides à l'état divisé.

Le secteur technique de l'invention est celui de la construction des appareils de transport et de manutention de produits solides à l'état divisé, notamment de produits fragiles en grains, en granulés, en copeaux, en fibres, etc....

On connaît des transporteurs mécaniques constitués par un fil enroulé suivant une hélice,dite spire hélicoïdale, qui est entraînée en rotation à l'intérieur d'une gaine tubulaire qui canalise les produits à transporter. La gaine peut être flexible, de telle sorte que ces transporteurs présentent l'avantage de pouvoir suivre des trajets courbes ou sinueux.

Certaines réalisations comportent, de plus, à l'intérieur de la spire hélicoïdale, un tube fixe ou entraîné en rotation avec la spire.

Ces convoyeurs permettent de transporter les produits solides à l'état divisé, même suivant un trajet montant et sinueux.

Les grains sont entraînés vers le haut par la rotation de la spire hélicoïdale qui est entraînée en rotation dans le sens qui correspond au pas, c'est-à-dire dans le sens qui tend à visser la spire hélicoïdale de haut en bas dans le produit.

Chaque grain individuel ne suit pas un trajet montant de façon continue. Tantôt il est projeté vers le haut par la poussée de la spire hélicoïdale ou par d'autres grains qui le percutent, tantôt il tend à rebomber par gravité jusqu'à ce qu'il soit à nouveau projeté vers le haut, de telle sorte que chaque grain suit, à l'intérieur du convoyeur, un trajet complexe formé de nombreuses boucles.

Il en résulte que les produits en grains, en granulés, en bâtonnets, en copeaux, en fibres, relativement fragiles, subissent de nombreuses brisures dans ce type de convoyeurs à spires hélicoïdales et que ces derniers ne peuvent pas être utilisés dans les cas fréquents où l'on exige de transporter de tels produits fragiles, avec une très faible proportion de produits brisés. Un exemple est la manutention de grains de café torréfiés ou de granulés à usage pharmaceutique ou comme aliments de bétail, qui doivent être manutentionnés en évitant au maximum de briser les grains ou les granulés.

On connaît des transporteurs rigides qui sont composés d'une

0051550

2

gaine extérieure tubulaire et rigide à l'intérieur de laquelle est disposé un arbre rigide portant des poils ou des brins souples qui sont implantés à la périphérie de l'arbre rigide suivant une hélice. Le brevet U.S. - A - 4.192.418 (MONTGOMERY) et le brevet U.S. - A - 3.684.082 (WARDELL) décrivent des convoyeurs de ce type.

L'objectif de la présente invention est de procurer des convoyeurs souples et flexibles qui présentent les mêmes avantages que les convoyeurs à spire hélicoïdale connus et qui permettent de transporter des produits solides à l'état divisé suivant un trajet courbe ou sinueux en évitant les risques de brisure ou de colmatage des produits transportés.

Les dispositifs pour transporter des produits solides à l'état divisé qui font l'objet de l'invention sont du type connu comportant une gaine tubulaire cylindrique externe ayant une ouverture à proximité de chacune de ses deux extrémités et une tige qui est située à l'intérieur de ladite gaine externe, qui porte des brins souples et flexibles implantés radialement sur ladite tige, le long d'une hélice, et qui est entraînée en rotation.

L'objectif de l'invention est atteint au moyen de dispositifs de ce type dans lesquels la gaine externe et la tige portant les brins souples sont flexibles, de telle sorte que le dispositif permet de transporter des produits solides à l'état divisé suivant un trajet courbe ou sinueux.

Selon un mode de réalisation, les brins souples sont implantés sur la tige flexible le long de plusieurs hélices parallèles, de même pas.

Selon un mode de réalisation préférentiel, la tige flexible est composée de plusieurs fils torsadés en hélice et lesdits brins souples sont pincés entre les fils torsadés.

Selon un autre mode de réalisation,la tige flexible est un câble souple qui est composé de plusieurs torons de fils et les brins souples sont pincés entre lesdits torons.

Selon un autre mode de réalisation, la tige flexible est un fil métallique enroulé en hélice à spires jointives et les brins souples sont pincés entre lesdites spires.

Les brins souples et flexibles sont constitués, de préférence par des crins animaux, des fibres végétales, des fils en résine synthétique ou des fils métalliques flexibles.

3

Selon un mode de réalisation avantageux, la gaine externe comporte sur sa face interne une ou plusieurs nervures hélicoïdales en relief dont le pas est de sens inverse à celui desdites hélices.

L'invention a pour résultat de nouveaux convoyeurs destinés à transporter des produits solides à l'état divisé, suivant un trajet courbe ou sinueux.

Un avantage très important des convoyeurs selon l'invention réside dans le fait qu'il peut transporter des produits fragiles en grains, en granulés, en copeaux, en bâtonnets, sans provoquer des brisures. Des essais réalisés sur des grains de café torréfiés avec un recyclage continu des grains ont montré qu'après 24 heures de recyclage continu, la proportion des grains brisés était infime.

Ce résultat est dû au fait que les brins souples et flexibles forment une barrière hélicoïdale qui s'oppose aux retombées des grains plus efficacement qu'une spire hélicoïdale. Les grains progressent vers le haut de façon plus continue et leur séjour dans le convoyeur est plus réduit. De plus, comme les brins sont souples, le contact des brins avec les produits divisés n'entraîne pas des effets de percussion qui risquent de briser les grains.

Les essais réalisés ont montré qu'il était possible de transporter par exemple des grains de café torréfiés en les élevant de plusieurs mètres en faisant tourner la tige interne à une vitesse réduite de l'ordre de 250 tours/minute. Cette vitesse de rotation relativement faible permet de réduire encore plus les risques de brisure. On peut choisir la nature des brins souples en fonction du produit à transporter.

Un autre avantage des dispositifs selon l'invention est qu'il permet de transporter des produits en vrac ayant une granulométrie relativement grosse par exemple des légumes en grains tels que des haricots, des pois ou des fruits en coque tels que des noisettes, des amandes, des noix.

Un convoyeur selon l'invention permet également de transporter suivant un trajet courbe ou sinueux des objets unitaires de faible volume et peut donc être utilisé pour desservir des chaînes de fabrication ou de conditionnement.

Il peut servir à transporter par exemple des vis, des écrous, des boulons, des rondelles etc...

Un convoyeur selon l'invention permet également de transporter

4

des produits divisés présentant des risques de colmatage, par exemple des produits fibreux. En effet, les poils souples se replient dès que le produit transporté a tendance à colmater et on évite ainsi le bourrage du produit et le blocage de la tige tournante.

La description suivante se réfère aux dessins annexés qui représentent, sans aucun caractère limitatif, des exemples de réalisation de dispositifs selon l'invention.

La figure 1 est une vue d'ensemble en élévation d'un dispositif selon l'invention.

La figure 2 est une coupe transversale selon II-II de la figure 1.

La figure 3 est une coupe longitudinale partielle d'un autre mode de réalisation d'un dispositif selon l'invention.

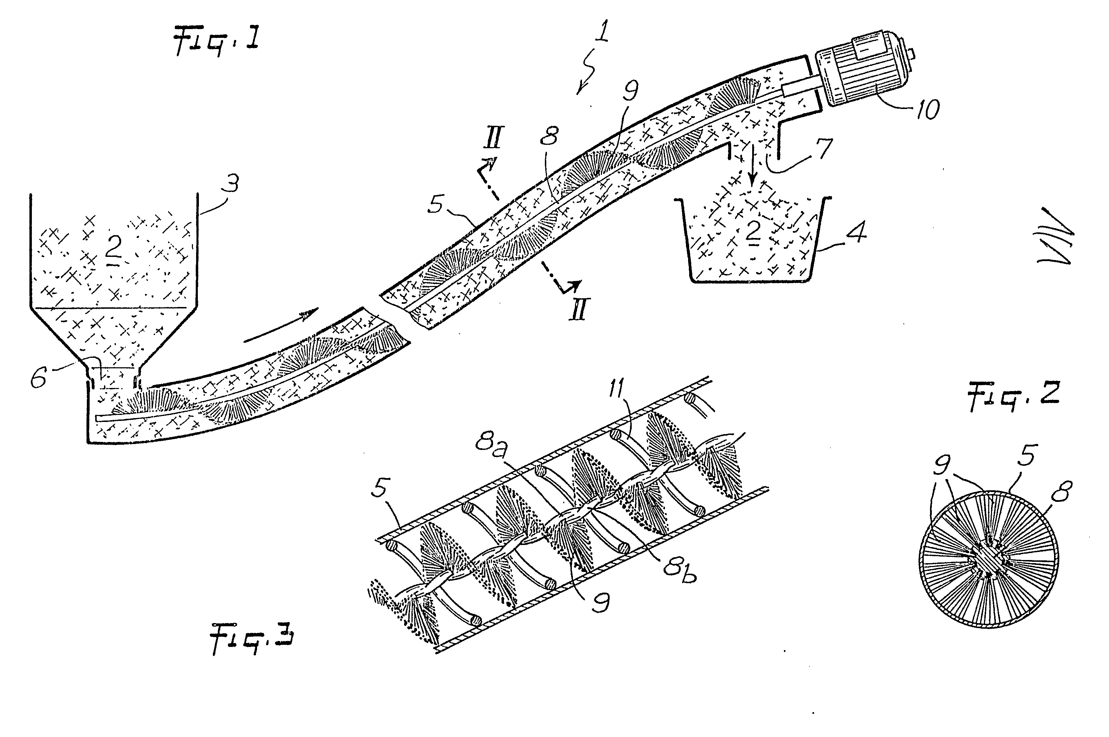

La figure 1 représente un dispositif destiné à transporter des produits solides à l'état divisé 2, contenus dans une trémie 3 jusqu'à un récipient 4. Les produits 2 sont des produits solides en vrac qui peuvent être des grains, par exemple des grains de café torréfié ou des grains de céréales, des granulés, par exemple des granulés pharmaceutiques ou des aliments de bétail, des fibres, des copeaux, des bâtonnets etc.... Ce peut être notamment des produits fragiles, qu'il faut transporter sans les briser.

Le dispositif 1 comporte une gaine cylindrique externe 5 qui est un tube souple. La gaine 5 comporte, à proximité de l'extrémité inférieure une ouverture 6 d'entrée des produits qui est connectée sur la sortie de la trémie 3. Elle comporte une deuxième ouverture 7 située au voisinage de l'extrémité supérieure à travers laquelle les produits 2 se déversent dans le récipient 4.

Dans l'exemple représenté, le récipient 4 est situé à un niveau supérieur à celui de l'ouverture de la trémie 3 et le transporteur 1 sert à élever les produits. Le récipient 4 pourrait être situé au même niveau ou à un niveau inférieur à celui de l'ouverture de la trémie.

Dans l'exemple choisi, l'ouverture 6 est connectée à la sortie d'une trémie et les produits 2 s'écoulent par gravité de la trémie vers le convoyeur.

En variante, l'extrémité inférieure du convoyeur 1 peut être plongée dans une masse de produits 2 contenus dans un récipient ouvert à la partie supérieure et, dans ce cas, le convoyeur aspire les produits 2 comme la tuyauterie d'aspiration d'une pompe aspire un liquide.

Le dispositif 1 comporte, en outre, une tige flexible 8 située à l'intérieur de la gaine 5. La tige 8 porte des brins souples et flexibles 9 qui sont implantés radialement le long d'une ou de plusieurs hélices de même pas.

Les brins souples 9 sont constitués par exemple par des crins animaux, par des fibres végétales, par des bouts de fils en résine synthétique ou par des bouts de fils métalliques flexibles. De façon générale, on peut utiliser les mêmes matériaux que ceux qui sont utilisés en brosserie comme poils pour confectionner des brosses, des pinceaux, des écouvillons ou des goupillons.

La figure 2 représente une coupe selon II-II dans un mode de réalisation où la tige 8 est une tige pleine dans laquelle les brins 9 sont plantés en touffes, qui sont situées le long d'une ligne hélicoïdale. La longueur des brins 9 est sensiblement égale à la largeur de l'espace annulaire compris entre la tige 8 et la gaine 5.

La gaine 5 et la tige 8 sont composées d'un matériau souple, par exemple d'une matière plastique souple, de telle sorte qu'elles peuvent suivre un tracé courbe ou sinueux.

La tige 8 est montée flottante à l'intérieur de la gaine dans laquelle elle est maintenue sensiblement centrée par les brins 9. La tige 8 est entraînée en rotation, par l'une de ses extrémités, par un moteur 10 dans le sens du pas de l'hélice formée par les brins 9, c'est-à-dire dans le sens qui tendrait à visser l'hélice de haut en bas dans les produits qui se déplacent donc d'un mouvement relatif de bas en haut.

La figure 3 représente, à plus grande échelle, une coupe longitudinale partielle d'un autre mode de réalisation d'un dispositif 1. Dans cet exemple, la tige centrale 8 est constituée par deux fils métalliques 8a, 8b torsadés selon une hélice et les brins 9 sont pincés entre deux fils selon la technique utilisée pour confectionner des goupillons ou des écouvillons destinés à nettoyer les bouteilles.

Dans les deux exemples représentés sur les figures 1 et 3, les brins 9 sont implantés le long d'une seule hélice mais, bien entendu, ils pourraient également être implantés suivant plusieurs hélices de même pas parallèles entre elles.

La figure 3 représente un mode de réalisation dans lequel la gaine externe 5 comporte, sur sa face interne, une nervure hélicoïdale en relief 11, qui est constituée par exemple par un fil enroulé en hélice et fixé à la paroi interne. Le pas de la nervure hélicoïdale 11 est de sens inverse au pas de l'hélice suivant laquelle sont implantés les brins 9. La nervure 11 a pour effet de convertir la vitesse tangentielle des grains 2 en une vitesse axiale dirigée vers le haut et d'accroître le débit du convoyeur pour un pas et une vitesse de rotation donnés de la tige centrale 8. La nervure hélicoïdale 11 permet aussi de conserver un même débit en réduisant la vitesse de rotation de la tige centrale, ce qui réduit les risques de brisure du produit 2.

Le pas de la nervure hélicoïdale 11 peut être égal ou différent de celui des hélices suivant lesquelles les brins 9 sont implantés.

La gaine 5 peut comporter plusieurs nervures hélicoïdales 11, de même pas, parallèles entre elles.

La réalisation de convoyeurs flexibles destinés à transporter des produits suivant un trajet courbe ou sinueux, présente des difficultés de construction de la tige centrale. En effet, la mise en rotation de la tige lorsqu'elle n'est pas rectiligne, entraîne à chaque tour une flexion de la tige d'où une fatigue du matériau qui la compose.

Le mode de réalisation selon la figure 3 dans lequel la tige centrale est composée de plusieurs fils torsadés, permet de réduire cette fatigue.

Selon un autre mode de réalisation avantageux, la tige centrale 8 est un câble souple formé de plusieurs torons de fils et les fils souples 9 sont pincés entre les torons.

Selon un autre mode de réalisation, la tige centrale 8 est constituée par un seul fil métallique qui est enroulé en hélice à spires jointives et les fils souples 8 sont pincés entre les spires successives. Cette solution permet d'entraîner la tige centrale en rotation suivant un trajet sinueux sans fatiguer le métal et elle facilite la fixation des poils selon un trajet hélicoïdal simplement en plaçant les poils entre les spires jointives.

1

R E V E N D I C A T I O N S
_____

1. Dispositif pour transporter des produits solides à l'état divisé du type comportant une gaine tubulaire cylindrique externe (5) ayant une ouverture (5, 6) à proximité de chacune de ses extrémités et une tige (8) qui est située à l'intérieur de ladite gaine externe, qui porte des brins souples et flexibles (9) implantés radialement sur ladite tige le long d'une hélice et qui est entraînée en rotation, caractérisé en ce que ladite gaine externe (5) et ladite tige (8) sont flexibles, de telle sorte que le dispositif permet de transporter les produits suivant un trajet courbe ou sinueux.

2. Dispositif selon la revendication 1, caractérisé en ce que lesdits brins (9) sont implantés sur ladite tige le long de plusieurs hélices parallèles de même pas.

3. Dispositif selon l'une quelconque des revendications 1 et 2, caractérisé en ce que ladite gaine externe (5) comporte, sur sa face interne, une ou plusieurs nervures hélicoïdales en relief (11) dont le pas est de sens inverse à celui desdites hélices.

4. Dispositif selon l'une quelconque des revendications 1 à 3, caractérisé en ce que ladite tige (8) est composée de plusieurs fils métalliques (8a, 8b) torsadés en hélice et lesdits brins souples (9) sont pincés entre lesdits fils.

5. Dispositif selon l'une quelconque des revendications 1 à 3, caractérisé en ce que ladite tige (8) est un câble souple qui est composé de plusieurs torons de fils et les brins souples (9) sont pincés entre lesdits torons.

6. Dispositif selon l'une quelconque des revendications 1 à 3, caractérisé en ce que ladite tige (8) est constituée par un fil métallique enroulé en hélice à spires jointes et lesdits brins souples (9) sont pincés entre lesdites spires.

Fig. 1

Fig. 2

Fig. 3

0051550

**Office européen
des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| D,A | US - A - 4 192 418 (MONTGOMERY) | |
| D,A | US - A - 3 684 082 (WARDELL) | |
| | -- | |
| | FR - A - 2 085 159 (RASTOIN) <br> * page 2, lignes 19-21; figure 1 * | 1 |
| | -- | |
| | FR - A - 1 511 104 (TAUPIN) <br> * page 2, colonne 1, lignes 4-15; page 2, colonne 2, lignes 31-35; figure unique * | 1,3 |
| | -- | |
| | FR - A - 2 081 188 (RASTOIN) <br> * page 4, lignes 1-13; figures 1,2 * | 4,6 |
| | ---------- | |

**CLASSEMENT DE LA DEMANDE (Int. Cl. 3)**

B 65 G 33/16
33/28

**DOMAINES TECHNIQUES RECHERCHES (Int. Cl. 3)**

B 65 G

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur. mais publié à la date de dépôt ou après cette date
D: cité dans la demande
L: cité pour d'autres raisons

&: membre de la même famille, document correspondant

Le present rapport de recherche a été établi pour toutes les revendications

| Lieu de la recherche | Date d'achèvement de la recherche | Examinateur |
|---|---|---|
| La Haye | 19-01-1982 | OSTIJN |

OEB Form 1503.1   06.78